# NEUE EUROPÄISCHE PATENTSCHRIFT

(11) **EP 1 846 281 B2**
(45) Veröffentlichungstag und Bekanntmachung des Hinweises auf die Entscheidung über den Einspruch: **22.06.2016**
(45) Hinweis auf die Patenterteilung: 13.05.2009
(21) Anmeldenummer: 06706881.7
(22) Anmeldetag: 11.02.2006
(51) Int. Cl.: B62D 53/08

(54) **SCHMIERSYSTEM FÜR EINE SATTELKUPPLUNG EINES ZUGFAHRZEUGES**
LUBRICATING SYSTEM FOR A FIFTH-WHEEL TRACTION COUPLING OF A TOWING VEHICLE
SYSTEME DE LUBRIFICATION POUR UNE SELLETTE D'ATTELAGE D'UN TRACTEUR

(30) Priorität: 11.02.2005 DE 102005007144
(43) Veröffentlichungstag der Anmeldung: 24.10.2007
(73) Patentinhaber: Jost-Werke GmbH, 63263 Neu-Isenburg (DE)
(72) Erfinder: ALGÜERA, José, Manuel, Gallego, 63739 Aschaffenburg (DE); SCHMIDT, Dirk, 65559 Limburg (DE)
(74) Vertreter: Mehler Achler
(86) Internationale Anmeldenummer: PCT/EP2006/001269
(87) Internationale Veröffentlichungsnummer: WO 2006/084752

(56) Entgegenhaltungen:
- EP-A- 0 507 342
- EP-A- 1 209 038
- EP-A1- 0 595 097
- EP-A1- 1 514 774
- DE-A1- 2 458 711
- DE-A1- 3 147 754
- DE-A1- 3 530 467
- DE-A1- 3 612 832
- DE-A1- 4 110 893
- FR-A- 2 555 110
- GB-A- 2 155 417
- US-A- 4 477 100
- US-A- 5 219 040
- US-A- 5 417 308
- US-A- 6 098 754

## Beschreibung

Die Erfindung betrifft eine Sattelkupplung eines Zugfahrzeuges, umfassend eine Kupplungsplatte, deren Oberseite mindestens eine Fettaustrittsöffnung aufweist, die über jeweils eine ortsfest an der Kupplungsplatte angeordnete Versorgungsleitung an eine Schmiervorrichtung angeschlossen ist.

Die Sattelkupplungen sind üblicherweise auf LKW-Zugmaschinen montiert und nehmen in angekuppeltem Zustand den Königszapfen eines Aufliegers auf. Nach dem Ankuppeln des Aufliegers wird über einen an der Sattelkupplung angeordneten Betätigungsgriff oder auch über einen aus dem Führerhaus der Zugmaschine fernsteuerbaren Antrieb die Verschlussmechanik der Sattelkupplung aus einer einfahrbereiten Öffnungsstellung in eine Verschlussstellung gebracht. Üblicherweise umschließt dazu ein zu der Verschlussmechanik gehöriger Verschlusshaken zumindest teilweise den in die Sattelkupplung eingefahrenen Königszapfen. Während der Fahrt kommt es zu einer Relativbewegung zwischen der Oberseite der Kupplungsplatte und einer Auflagefläche auf der Unterseite des Aufliegers sowie zwischen den Komponenten des Verschlusses und dem Königszapfen. Die Relativbewegung, resultiert aus den Lenkbewegungen der Zugmaschine gegenüber dem Auflieger. Diese mechanische Belastung wird zusätzlich noch durch korrosive Einflüsse verschärft, beispielsweise hervorgerufen durch Kontakt mit Diesel und einem unvermeidbaren Sandeintrag.

Um hiereinen Materialverschleiß möglichst gering zu halten, muss die Oberseite der Kupplungsplatte regelmäßig abgeschmiert werden.

Dieses Abschmieren wird bei Zugfahrzeugen mit einer Zentralschmieranlage auch automatisiert vorgenommen. Hierzu wird üblicherweise eine zusätzliche Versorgungsleitung an die Zentralschmieranlage angeschlossen und mit in der Oberfläche der Kupplungsplatte eingesetzten Fettaustrittsöffnungen sowie mit Schmierbohrungen am Königszapfen verbunden. Bei modernen Zugfahrzeugen wird jedoch durch den zunehmenden Einsatz von wartungsarmen Lagern eine Fettversorgung über eine Zentralschmieranlage unnötig, so dass entweder auf eine Installation einer Zentralschmieranlage verzichtet und die Kupplungsplatte von Hand abgeschmiert oder eine teuere Zentralschmieranlage ausschließlich zum Abschmieren der Sattelkupplung auf dem Zugfahrzeug eingebaut wird.

Die FR2555110 A1 offenbart eine Sattelkupplung mit Schmiersystem für ein Zugfahrzeug, wobei das Schmiersystem eine Kupplungsplatte umfasst, deren Oberseite mindestens eine Fettaustrittsöffnung aufweist, die über jeweils eine ortsfest an der Kupplungsplatte angeordnete Versorgungsleitung an eine Schmiervorrichtung angeschlossen ist, wobei die Schmiervorrichtung der Sattelkupplung und der Aufliegerplatte zugeordnet ist und einen Schmierfettbehälter, eine Förderpumpe und einen Verteiler umfasst, wobei die Förderpumpe und der Verteiler der Schmiervorrichtung in einer Baueinheit integriert sind und wobei die gemeinsame Baueinheit neben der Sattelkupplung angeordnet ist.

Ausgehend von dieser Situation liegt der Erfindung die Aufgabe zugrunde, ein Schmiersystem für Zugmaschinen zu entwickeln, dass ein automatisiertes Abschmieren unabhängig von dem Vorhandensein einer Zentralschmieranlage ermöglicht.

Die Aufgabe wird erfindungsgemäß mit einer Sattelkupplung nach Anspruch 1 gelöst.

Aufgrund der Zuordnung des Schmiersystems ausschließlich für die abzuschmierenden Komponenten der Sattelkupplung ist das Schmiersystem unabhängig von der technischen Ausrüstung des Zugfahrzeuges oder dem Einsatzprofil des Sattelzuges, wie beispielsweise der Häufigkeit von Aufliegerwechseln und der daraus resultierenden Beschaffenheit der Oberseite der Kupplungsplatte. Diese kann bei wenigen Aufliegerwechseln einen weitgehend wartungsfreien Kunststoffgleitbelag oder bei häufigen Aufliegerwechseln eine Blech- oder Gussoberfläche aufweisen.

In einer bevorzugten Ausführungsform ist die Schmiervorrichtung unterhalb der Kupplungsplatte angeordnet. In diesem Bereich existiert meistens zwischen vorstehenden Verstärkungsrippen ein freier Bauraum, in welchem die Schmiervorrichtung geschützt untergebracht werden kann. Hieraus resultiert der Vorteil, dass die Schmiervorrichtung mit der beweglichen Kupplungsplatte schwenkt und deshalb keine vergleichsweise störanfälligen flexiblen Leitungen verwendet werden.

Die Schmiervorrichtung umfasst einen Schmierfettbehälter und eine Förderpumpe. Der Schmierfettbedarf der Sattelkupplung liegt bei einem jährlichen Bedarf von ca. 1 bis 1,2 dm³, so dass der Schmierfettbehälter ein Volumen von mindestens 0,75 dm³, besonders bevorzugt 1,0 dm³ aufweisen sollte. Die Förderpumpe kann dabei in Abhängigkeit des Leitungsdrucks in einer Versorgungsleitung oder allen Versorgungsleitungen zeitweise in Betrieb gehen und für einen Ausstoß des Schmierfetts aus den Fettaustrittsöffnungen sorgen.

Für den Praxisbetrieb ist es von Vorteil, wenn der Schmierfettbehälter eine Füllstandsanzeige aufweist, so dass ein fast leerer Schmierfettbehälter rechtzeitig erkannt werden kann. Die Füllstandsanzeige sollte im Fahrerhaus derZugmaschine im Blickfeld des Fahrers angeordnet sein oder an einer Stelle des Fahrzeugs, die vom Fahrer ohne Schwierigkeiten eingesehen werden kann. Der Schmierfettbehälter kann entweder in eingebautem Zustand von außen befüllt oder als Kartusche gewechselt werden. Die Förderpumpe und weitere Bauteile brauchen dann nicht ausgebaut zu werden.

Vorteilhafterweise ist die Förderpumpe über eine Elektronik gesteuert, so dass dort Steuerprogramme für die Schmierung hinterlegt werden können. Auch wäre dadurch die Kommunikation mit einem externen Steuergerät möglich. Das Steuergerät kann Signale von weiteren Sensoren empfangen, die beispielsweise die Anwesenheit eines Aufliegers detektieren und in Abhängigkeit dieser Daten einen Betrieb der Förderpumpe auslösen oder beenden. So ist es auch möglich, über Sensoren das Schwenken des Aufliegers gegenüber dem Zugfahrzeug zu erfassen und nach einer vorgebbaren Anzahl von Schwenkbewegungen einen Ausstoß des Schmierfetts zu imitieren.

Vorzugsweise ist das Steuergerät an der Sattelkupplung angeordnet. Dieses hat auch den Vorteil, dass die Sattelkupplung vor ihrer Auslieferung mit dem gesamten Schmiersystem konfiguriert und vom Kunden auf einfache Weise an das Fahrzeug angebaut werden kann.

Die Kommunikation zwischen der Elektronik und dem Steuergerät kann drahtlos erfolgen. Die Elektronik kann alternativ auch über einen Anschlussstecker mit dem Steuergerät verbunden werden.

Die Schmiervorrichtung weist einen Verteiler auf. Dieser Verteiler umfasst an jeder Versorgungsleitung ein eigenes Ventil, so dass bestimmte Bereiche der Sattelkupplung oder einzelne Komponenten wie der Verschlusshaken selektiv mit einer vorgebbaren Schmierfettmenge versorgt werden. Eine weitere Einstellmöglichkeit der Schmierfettmenge ist über die Auswahl des Querschnitts der Versorgungsleitungen möglich. So können längere Leitungen mit einem größeren Querschnitt und kürzere Leitungen mit einem kleineren Querschnitt versehen sein.

Durch die Erfindung lässt sich eine besonders wartungsfreundliche und darüber hinaus kompakte Bauweise erzielen, weil der Schmierfettbehälter, die Förderpumpe und der Verteiler in einer Baueinheit integriert sind

Um den ohnehin knappen Bauraum insbesondere unterhalb der Kupplungsplatte möglichst optimal auszunutzen, sollte die Schmiervorrichtung eine Bauform aufweisen, die an eine Kontur der Sattelkupplung beziehungsweise der Kupplungsplatte zumindest teilweise angepasst ist. Optimal wäre hier das Ausbilden der Schmiervorrichtung entsprechend eines konkreten dafür vorgesehenen Einbauraumes. Sofern dieses aufgrund von Abdichtungsproblemen des Schmierfettbehälters nicht möglich ist, sollte die äußere Form zumindest an den zur Verfügung stehenden Bauraum angenähert werden.

Vorteilhafterweise ist die Schmiervorrichtung als Kunststoff- und/oder Metallformteil gefertigt.

Die Verschlusskomponenten der Sattelkupplung können ebenfalls über eine Versorgungsleitung an die Schmiervorrichtung angeschlossen werden.

Sofern an der Sattelkupplung ein beschichteter Verschlusshaken eingesetzt ist, kann die hierfür notwendige Schmierstoffmenge gegenüber der für einen Standardhaken deutlich reduziert werden, was sich vorteilhaft auf die Behältergröße auswirken kann.

Zum besseren Verständnis der Erfindung wird diese nachfolgend anhand von vier Zeichnungsfiguren näher erläutert. Dabei zeigt die:
- **Fig. 1:**: eine Unteransicht auf eine Kupplungsplatte mit Schmiervorrichtung;
- **Fig. 2:**: eine vergrößerte schematische Ansicht der Schmiervorrichtung;
- **Fig. 3:**: eine perspektivische Draufsicht auf eine Kupplungsplatte mit Fettaustrittsöffnungen und
- **Fig. 4:**: eine schematische Seitenansicht auf eine Kupplungsplatte mit verschiedenen. Querschnittsgeometrien der Schmiervorrichtung.

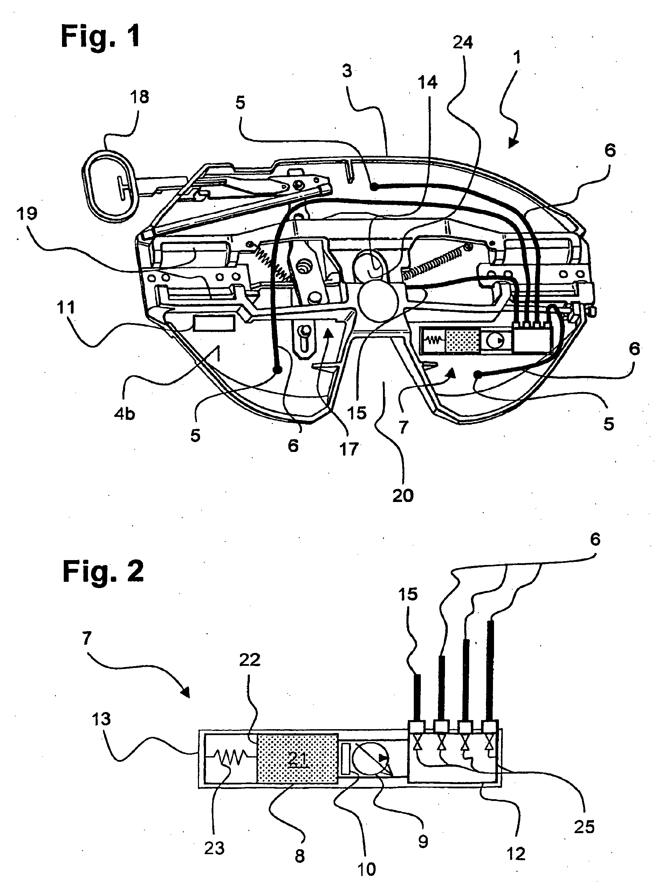

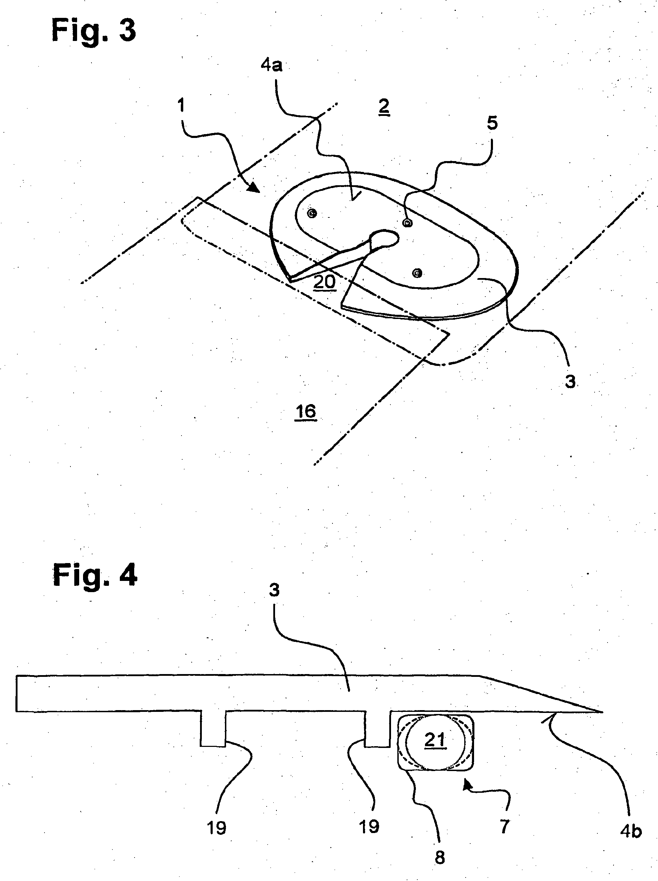

Die Figur 1 zeigt in einer Unteransicht eine Kupplungsplatte 3 einer Sattelkupplung 1, an deren Unterseite 4b eine Schmiervorrichtung 7 angebracht ist. In einem mittigen Bereich sind auf der Unterseite 4b der Kupplungsplatte 3 zwei parallele Verstärkungsrippen 19 angeordnet, welche vollständig die Kupplungsplatte 3 durchlaufen. Zwischen den Verstärkungsrippen 19 befindet sich zentrisch in der Kupplungsplatte 3 ein Lagerabschnitt 24, in den zum Ankuppeln eines Aufliegers 16 (siehe Figur 3) ein nicht gezeigter Königszapfen über eine Einfahröffnung 20 eingefahren werden kann. Nach dem Einfahren des Königszapfens wird die Sattelkupplung 1 über einen Betätigungsgriff 18 und eine Verschlussmechanik 17 aus einereinfahrbereiten Öffnungsstellung in eine geschlossene Fahrstellung gebracht. Dabei wirkt die Verschlussmechanik 17 mit einem durch die Verstärkungsrippen 19 weitgehend verdeckten Verschlusshaken 14 zusammen, wobei in der Fahrstellung der Verschlusshaken 14 den nicht gezeigten Königszapfen zumindest teilweise umgreift.

Die Schmiervorrichtung 7 ist in ihrer axialen Erstreckung parallel zu einer der Verstärkungsrippen 19 ausgerichtet. An der Schmiervorrichtung 7 sind vier Versorgungsleitungen 6, 15 angeschlossen, die ebenfalls auf der Unterseite 4b der Kupplungsplatte 3 ortsfest verlegt sind. Die drei Versorgungsleitungen 6 münden in Fettaustrittsöffnungen 5, welche die Kupplungsplatte 3 durchbrechen und einen Schmierfettaustritt auf der Oberseite 4a (siehe Figur 3) der Kupplungsplatte 3 ermöglichen. Die Fettaustrittsöffnungen 5 sind in Umfangsrichtung gleichmäßig in der Kupplungsplatte 3 verteilt.

Die einzige Versorgungsleitung 15 greift ebenfalls an der Schmiervorrichtung 7 an, dient jedoch der Schmierung des Verschlusshakens 14. Hierzu ist die Versorgungsleitung 15 zumindest im Übergangsbereich zu dem Verschlusshaken 14 flexibel ausgebildet, um eine Schwenkbewegung des Verschlusshakens 14 weiterhin zu ermöglichen.

Ebenfalls in räumlicher Nähe zu einer der Verstärkungsrippen 19 ist ein Steuergerät 11 angeordnet, welches drahtlos Signale betreffend den Ausstoß von Schmierfett an die Schmiervorrichtung 7 sendet.

In der Figur 2 sind schematisch die einzelnen Bauelemente der Schmiervorrichtung 7 dargestellt. In einem Schmierfettbehälter 8 befindet sich Schmierfett 21, welches über einen Ausschubkolben 22 einer an den Schmierfettbehälter 8 angebauten Förderpumpe 9 zugeführt wird. Der Ausschubkolben 22 wird über eine Druckfeder 23 vorgeschoben, wodurch an der Förderpumpe 9 stets eine ausreichende Menge Schmierfett 21 ansteht. Die Förderpumpe 9 wird über eine Elektronik 10 gesteuert, die wiederum Signale von dem in Figur 1 erkennbaren Steuergerät 11 erhält. Die Bauelemente Schmierfettbehälter 8, Förderpumpe 9 und Verteiler 12 sind besonders kompakt in einem gemeinsamen Gehäuse 13 untergebracht.

Hinter der Förderpumpe 9 gelangt das Schmierfett 21 in den Verteiler 12, an dessen Ausgänge die Versorgungsleitungen 6, 15 angreifen. In dem Verteiler 12 befinden sich insbesondere die Steuerventile 25, mit denen ein selektives Beaufschlagen der Fettaustrittsöffnungen 5 beziehungsweise des Verschlusshakens 14 (siehe Figur 1) möglich ist.

Die Figur 3 zeigt die Positionierung der Kupplungsplatte 3 auf einem Zugfahrzeug 2, wobei der Auflieger 16 während des Kuppelns bereits die Kupplungsplatte 3 teilweise überragt. Auf der Oberseite 4a der Kupplungsplatte sind die insgesamt drei Fettaustrittsöffnungen 5 zu erkennen. Die Versorgungsleitungen 6, 15 und die Schmiervorrichtung 7 befinden sich unter der Kupplungsplatte 3 und sind deshalb nicht sichtbar.

In der Figur 4 ist schematisch eine Kupplungsplatte 3 dargestellt, auf deren Unterseite 4b zwei Verstärkungsrippen 19 vorstehen. Aufgrund des zumeist geringen freien Bauraums unterhalb der Kupplungsplatte 3 und dem Erfordernis eine möglichst große Menge an Schmierfett 21 bereitzuhalten, um dadurch die Intervalle zum Nachfüllen von Schmierfett 21 zeitlich zu maximieren, kann der Schmierfettbehälter 8 auch mit einem angenährt elliptischen oderviereckigen Querschnitt ausgeformt sein. Eine Annäherung an eine eckige Querschnittsform führt jedoch in zunehmendem Maße zu Abdichtungsproblemen des Ausschubkolbens 22 (siehe Figur 2). Mit einer annähernd eckigen Querschnittsform schmiegt sich der Schmierfettbehälter 8 beziehungsweise die Schmiervorrichtung 7 besser an bereits an der Kupplungsplatte 3 vorhandene Ausformungen wie zum Beispiel Verstärkungsrippen 19 an und ermöglicht dabei eine möglichst große Menge des Schmierfetts 21 zu bevorraten.

### Bezugszeichenliste

- 1: Sattelkupplung
- 2: Zugfahrzeug
- 3: Kupplungsplatte
- 4a: Oberseite Kupplungsplatte
- 4b: Unterseite Kupplungsplatte
- 5: Fettaustrittsöffnung
- 6: Versorgungsleitung

- 7: Schmiervorrichtung
- 8: Schmierfettbehälter
- 9: Förderpumpe
- 10: Elektronik
- 11: Steuergerät
- 12: Verteiler
- 13: Baueinheit, Gehäuse
- 14: Verschlusshaken
- 15: Versorgungsleitung Verschlusshaken
- 16: Auflieger
- 17: Verschlussmechanik
- 18: Betätigungsgriff
- 19: Verstärkungsrippe
- 20: Einfahröffnung
- 21: Schmierfett
- 22: Ausschubkolben
- 23: Druckfeder
- 24: Lagerabschnitt
- 25: Steuerventile

## Patentansprüche

1. Sattelkupplung (1) mit Schmiersystem für ein Zugfahrzeug (2), wobei die Sattelkupplung (1) eine Kupplungsplatte (3) umfasst, deren Oberseite (4) mindestens eine Fettaustrittsöffnung (5) aufweist, die über jeweils eine ortsfest an der Kupplungsplatte (3) angeordnete Versorgungsleitung (6) an eine Schmiervorrichtung (7) angeschlossen ist, wobei die Schmiervorrichtung (7) ausschließlich der Sattelkupplung (1) zugeordnet ist,
einen Schmierfettbehälter (8), eine Förderpumpe (9) und einen Verteiler (12) umfasst,
wobei der Schmierfettbehälter (8), die Förderpumpe (9) und der Verteiler (12) der Schmiervorrichtung (7) in einer Baueinheit (13) integriert sind und
wobei die gemeinsame Baueinheit (13) an der Kupplungsplatte (3) angebaut ist.

2. Sattelkupplung (1) mit Schmiersystem nach Anspruch 1, **dadurch gekennzeichnet, dass** die Förderpumpe (9) über eine Elektronik (10) gesteuert ist.

3. Sattelkupplung (1) mit Schmiersystem nach Anspruch 2, **dadurch gekennzeichnet, dass** die Elektronik (10) mit einem externen Steuergerät (11) kommunizieren kann.

4. Sattelkupplung (1) mit Schmiersystem nach Anspruch 3, **dadurch gekennzeichnet, dass** das Steuergerät (11) an der Sattelkupplung (1) angeordnet ist.

5. Sattelkupplung (1) mit Schmiersystem nach einem der Ansprüche 2 bis 4, **dadurch gekennzeichnet, dass** die Elektronik (10) und das Steuergerät (11) drahtlos miteinander kommunizieren können.

6. Sattelkupplung (1) mit Schmiersystem nach einem der Ansprüche 1 bis 5, **dadurch gekennzeichnet, dass** die Schmiervorrichtung (7) eine Bauform aufweist, die an die Kontur der Sattelkupplung (1) zumindest teilweise angepasst ist.

7. Sattelkupplung (1) mit Schmiersystem nach einem der Ansprüche 1 bis 6, **dadurch gekennzeichnet, dass** die Schmiervorrichtung (7) als kunststoff- und/oder Metallformteil gefertigt ist.

8. Sattelkupplung (1) mit Schmiersystem und einem beschichteten Verschlusshaken (14) nach einem der Ansprüche 1 bis 7, **dadurch gekennzeichnet, dass** der beschichtete Verschlusshaken (14) über eine Versorgungsleitung (15) an die Schmiervorrichtung (7) angeschlossen ist.

## Claims

1. Fifth wheel (1) having a lubrication system for a traction vehicle (2), wherein the fifth wheel (1) comprises a coupling plate (3) whose upper side (4) has at least one grease discharge opening (5), which is connected by means of a supply line (6) which is fixedly arranged on the coupling plate (3) to a lubrication device (7), wherein the lubrication device (7) is associated exclusively with the fifth wheel (1),
comprises a lubricant grease container (8), a delivery pump (9) and a distributor (12),
wherein the lubricant grease container (8), the delivery pump (9) and the distributor (12) of the lubrication device (7) are integrated in a structural unit (13) and wherein the common structural unit (13) is constructed on the coupling plate (3).

2. Fifth wheel (1) having a lubrication system according to claim 1, **characterised in that** the delivery pump (9) is controlled by means of an electronic system (10).

3. Fifth wheel (1) having a lubrication system according to claim 2, **characterised in that** the electronic system (10) can communicate with an external control device (11).

4. Fifth wheel (1) having a lubrication system according to claim 3, **characterised in that** the control device (11) is arranged on the fifth wheel (1).

5. Fifth wheel (1) having a lubrication system according to any one of claims 2 to 4, **characterised in that** the electronic system (10) and the control device (11) can communicate wirelessly with each other.

6. Fifth wheel (1) having a lubrication system according to any one of claims 1 to 5, **characterised in that** the lubrication device (7) has a structural shape which is at least partially adapted to the contour of the fifth wheel (1).

7. Fifth wheel (1) having a lubrication system according to any one of claims 1 to 6, **characterised in that** the lubrication device (7) is produced as a shaped plastics material and/or metal component.

8. Fifth wheel (1) having a lubrication system and a coated closure hook (14) according to any one of claims 1 to 7, **characterised in that** the coated closure hook (14) is connected to the lubrication device (7) by means of a supply line (15).

## Revendications

1. Sellette d'attelage (1) avec un système de lubrification pour un véhicule tracteur (2), la sellette d'attelage (1) comprenant une plaque d'attelage (3) dont la face supérieure (4) comporte au moins un orifice d'écoulement de graisse (5) relié à un dispositif lubrificateur (7) par une conduite d'alimentation (6) respective fixement disposée contre la plaque d'attelage (3), le dispositif lubrificateur (7) étant exclusivement affecté à la sellette d'attelage (1),
comprenant un réservoir de graisse de lubrification (8), une pompe de refoulement (9) et un distributeur (12),
où le réservoir de graisse de lubrification (8), la pompe de refoulement (9) et le distributeur (12) du dispositif lubrificateur (7) sont intégrés à une unité de construction (13), et où l'unité de construction (13) commune est montée contre la plaque d'attelage (3).

2. Sellette d'attelage (1) avec un système de lubrification selon la revendication 1, **caractérisée en ce que** la pompe de refoulement (9) est commandée par un équipement électronique (10).

3. Sellette d'attelage (1) avec un système de lubrification selon la revendication 2, **caractérisée en ce que** l'équipement électronique (10) peut communiquer avec un appareil de commande (11) externe.

4. Sellette d'attelage (1) avec un système de lubrification selon la revendication 3, **caractérisée en ce que** l'appareil de commande (11) est disposé contre la sellette d'attelage (1).

5. Sellette d'attelage (1) avec un système de lubrification selon l'une des revendications 2 à 4, **caractérisée en ce que** l'équipement électronique (10) et l'appareil de commande (11) peuvent communiquer sans fil entre eux.

6. Sellette d'attelage (1) avec un système de lubrification selon l'une des revendications 1 à 5, **caractérisée en ce que** le dispositif lubrificateur (7) présente une forme de construction au moins partiellement ajustée au contour de la sellette d'attelage (1).

7. Sellette d'attelage (1) avec un système de lubrification selon l'une des revendications 1 à 6, **caractérisée en ce que** le dispositif lubrificateur (7) est exécuté comme pièce moulée en matière plastique et/ou en métal.

8. Sellette d'attelage (1) avec un système de lubrification et un crochet de fermeture revêtu (14) selon l'une des revendications 1 à 7, **caractérisé en ce que** le crochet de fermeture revêtu (14) est relié au dispositif lubrificateur (7) par une conduite d'alimentation (15).
